# EUROPÄISCHE PATENTSCHRIFT

(11) **EP 0 695 572 B1**
(45) Veröffentlichungstag und Bekanntmachung des Hinweises auf die Patenterteilung: **17.10.2001**
(21) Anmeldenummer: 95107014.3
(22) Anmeldetag: 09.05.1995
(51) Int. Cl.: B01D 46/24

(54) **Ölabscheider**
Oil separator
Séparateur d'huile

(30) Priorität: 05.08.1994 DE 4427753
(43) Veröffentlichungstag der Anmeldung: 07.02.1996
(73) Patentinhaber: FILTERWERK MANN & HUMMEL GMBH, 71638 Ludwigsburg (DE)
(72) Erfinder: Hinderer, Heiko, D-71686 Remseck (DE); Jokschas, Günter, D-71540 Murrhardt (DE); Keller, Lothar, D-70176 Stuttgart (DE); Wolf, Michael, D-71126 Gäufelden (DE)
(74) Vertreter: Voth, Gerhard, Dipl.-Ing.

(56) Entgegenhaltungen:
- WO-A-94/13389
- DE-U- 8 501 736
- FR-A- 2 003 972
- GB-A- 1 602 686
- GB-A- 2 063 098
- GB-A- 2 119 674

## Beschreibung

Die Erfindung betrifft einen ölabscheider für Luft gemäß dem Oberbegriff des Hauptanspruchs.

Derartige ölabscheider werden insbesondere zur Rückgewinnung des fein verteilten Öles in der von Öl überfluteten Schraubenverdichtern erzeugten Druckluft verwendet. Die Tröpfchengröße des abzuscheidenden Öles ist verhältnismäßig klein und erstreckt sich bis in den Aerosolbereich mit Tropfendurchmessern kleiner als 0,1 µm.

Um einen möglichst großen Prozentsatz des Öles abzuscheiden, sieht man Stufenabscheider vor, bei denen das zuerst durchströmende Abscheideelement eine grobere Struktur aufweist als das nachgeschaltete zweite Element.

Bei einem aus der GB-A-9 88 692 bekannten ölabscheider sind das innere grobere Abscheideelement und das äußere feinere Abscheideelement mit einem gemeinsamen Boden versehen. Dies bedeutet, daß die gesamte ölmenge, die sich in dem Ringraum zwischen dem äußeren und inneren Ölabscheideelement am Boden absetzt, durch das innere Abscheideelement hindurchtreten muß, um von dem ersten Ölabzugsrohr abgesaugt werden zu können.

Aus der GB A 20 63 098 ist ein Filtersystem zum Filtrieren von Druckluft dargestellt. Dieses Filtersystem weist Elemente auf, welche zur Abdichtung mit zusätzlichen Dichtringen versehen sind.

Es ist weiterhin aus dem DE-U-85 01 736 eine Vorrichtung zum Abscheiden von Öltröpfchen aus Luft bekannt. Dabei ist das Abscheideelement als ringförmger Coalescer ausgebildet, der die feinen Öltröpfchen zu größeren, sich durch Schwerkraft im Abscheideelement und stromab davon nach unten absetzenden Öltröpfchen bindet.

Zum Austausch des Ölabscheiders wird das gesamte Element von dem Befestigungskopf abgeschraubt und durch ein neues Element ersetzt. Nachteilig ist bei dem Austausch die Entsorgung des gesamten Elements.

Im Vordergrund steht bei der Abfallentsorgung die Recyclingfähigkeit. Gerade bei solchen Austauschelementen ist darauf zu achten, daß diese in den Rohstoffkreislauf zurückgeführt werden können. Da es sich bei der bekannten Vorrichtung um ein Element handelt, das aus einer Vielzahl von unterschiedlichen Materialien besteht, ist eine Trennung der Werkstoffe nicht oder nur mit unverhältnismäßig hohem Aufwand möglich.

Der Erfindung liegt daher die Aufgabe zugrunde, einen Ölabscheider zu schaffen, der kostengünstig und einfach herstellbar ist und einen recyclingfähigen Aufbau aufweist.

Diese Aufgabe wird ausgehend von dem Oberbegriff des Hauptanspruchs durch dessen kennzeichnende Merkmale gelöst.

Der Kerngedanke der Erfindung liegt in der Herstellung eines Elements, das mit möglichst wenig Metallteilen ausgestattet ist. Es ist ein metallischer Stützkörper vorgesehen, auf welchem das Coalescerelement angeordnet ist. Stützkörper und Coalescerelement sind stirnseitig in eine Vergußmasse eingebettet. Diese Vergußmasse übernimmt gleichzeitig auch Dichtfunktionen, d.h. durch die besondere Ausgestaltung der Vergußmasse wird eine Axial- und Radialdichtung gebildet, die den eingangsseitigen Raum des Ölabscheiders von dem ausgangsseitigen ölfreien Raum abtrennt.

Gemäß der Erfindung bezüglich des stirnseitigen Abschlußelements wird zum Herstellen desselben ein Verfahren benutzt, das unter dem Namen Zweikomponentenverfahren bekannt ist. Das Anschlußelement wird hierbei aus zwei unterschiedlichen Werkstoffen aufgebaut. Zunächst wird in einem ersten Verfahrensschritt eine erste Komponente aufgetragen. Diese dient zur stirnseitigen Abdichtung des Coalescerelements und zur Verbindung zwischen Coalescerelement und Stützkörper. In einem zweiten Verfahrensschritt wird auf die erste Komponente eine zweite Komponente aufgebracht, die gummielastische Eigenschaften besitzt und für die Abdichtung des Coalescerelements gegenüber dem Gehäuse sorgt.

Gemäß einer weiteren Ausgestaltung der Erfindung ist vorgesehen, dem Coalescerelement ein weiteres Abscheiderelement nachzuordnen. Dieses dient in erster Linie dazu, die im Coalescerelement gebildeten Öltröpfchen aufzufangen und in den Ölsammelbereich zu leiten. Insofern ist dieses Element ein Filter, welches die entölte Luft hindurchströmen läßt und die ausgeschiedenen Bestandteile zurückhält.

In einer Ausgestaltung der Erfindung ist das Coalescerelement über eine Mittelverschraubung im Gehäuse lösbar angeordnet. Damit läßt es sich besonders leicht aus dem Gehäuse herausnehmen und durch ein neues Element ersetzen.

Gemäß einer weiteren vorteilhaften Ausgestaltung ist das Stützrohr trennbar an dem Coalescerelement befestigt. Dies bedeutet, daß durch ein Auftrennen oder Aufschneiden das metallische Stützrohr in einfacher Weise von dem Coalescerelement, d.h. von dem Vliesmaterial getrennt werden kann.

In gleicher Weise kann ein Außenmantel, falls er erforderlich ist, lösbar mit dem Coalescerelement bzw. mit dem Stützrohr verbunden sein. Die Abdichtung zwischen Coalescerelement und Gehäuse kann, wie bereits erwähnt, über einen Zweikomponentenwerkstoff erfolgen. Es besteht auch die Möglichkeit, anstelle eines elastomeren Werkstoffes ein 0-Ring in geeigneter Weise anzuordnen oder eine andere Form einer Dichtung zu wählen, die eine axiale oder rdiale Abdichtung ermöglicht.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand eines Ausführungsbeispiels näher erläutert. Es zeigt:
Figur 1 als Stand der Technik ein Luftentölelement in einer Schnittdarstellung
Figur 2 eine Abdichtungsform.

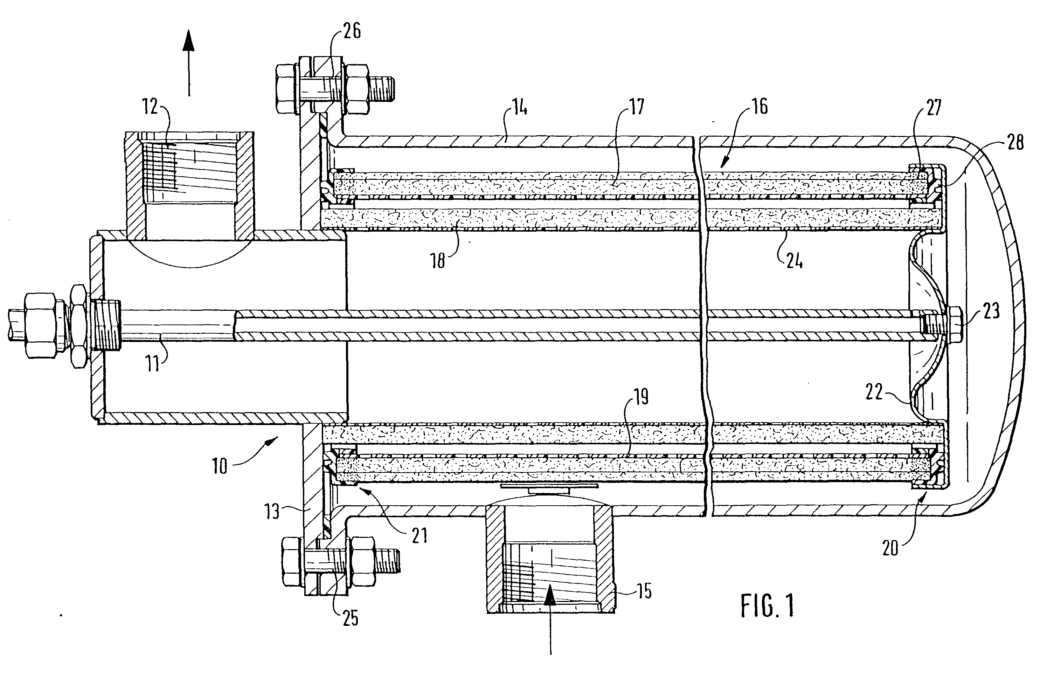

Das Luftentölelement nach dem Stand der Technik gemäß Figur 1 besteht aus einem Befestigungskopf 10. An diesem Befestigungskopf befindet sich ein Ölablaßrohr 11, ein Abströmkanal 12, in dem die entölte Luft abgeleitet wird und ein Befestigungsflansch 13, zum Befestigen des Gehäuses 14. An dem Gehäuse 14 ist eine Einlaßöffnung 15 angeordnet. Durch diese Einlaßöffnung strömt die ölbeladene Luft.

Innerhalb des Gehäuses 14 befindet sich ein Entölelement 16. Dieses besteht aus einem ersten Coalescerelement 17, welches zylinderförmig, rohrförmig oder als zick-zack gefaltetes Element gestaltet ist, sowie einem zweiten nachgeschalteten Abscheideelement 18. Das Coalescerelement 17 liegt auf einem Stützkörper 19 auf und ist an den stirnseitigen Enden mit Dichtungen 20, 21 versehen. Die Dichtungen 20, 21 bestehen aus Vergußmassen, in welche jeweils die Endbereiche des Coalescerelements eingebunden sind. Die Vergußmasse ist an der Stirnfläche ähnlich einer Lippendichtung ausgebildet. Aufgrund der Elastizität der Vergußmasse wird eine radiale Abdichtung erzielt.

An dem, dem Befestigungskopf 10 gegenüberliegenden Ende erfolgt die Abdichtung an einer Endscheibe 22. Diese Endscheibe ist über eine Befestigungsschraube 23 an dem Ölablaßrohr 11 befestigt. Das Abscheideelement 18 ist ebenfalls auf einem Stützrohr 24 befestigt und auf den Befestigungskopf 10 aufgesteckt sowie durch die Endscheibe 22 fixiert.

Zum Austausch des Coalescerelements wird das Gehäuse 14 geöffnet, d.h. die Schraubverbindungen 25, 26 gelöst, sowie die Endscheibe 22 entfernt. Anschließend kann das Coalescerelement abgezogen werden. In gleicher Weise kann auch das Abscheideelement, falls erforderlich, ausgetauscht werden.

Zur problemlosen Entsorgung des Coalescerelements werden die Endbereiche mit den Dichtungen 20, 21 abgetrennt. Daraufhin kann der mittlere Bereich, also das Vliesmaterial, von dem metallischen Stützkörper getrennt werden. Das Coalescerelement weist damit keine Metallteile mehr auf und läßt sich in einfacher Weise thermisch entsorgen. Die Dichtungen 20, 21 können nach Art eines Zweikomponentenelements aufgebaut sein, wobei die erste Komponente 27 teilweise in das Coalescerelement eindringt und hier für eine Abdichtung sowie die Verbindung des Coalescerelements mit dem Stützkörper sorgt. Das zweite Element 28 besteht aus einem elastomeren Werkstoff, der für eine zuverlässige radiale Abdichtung sorgt.

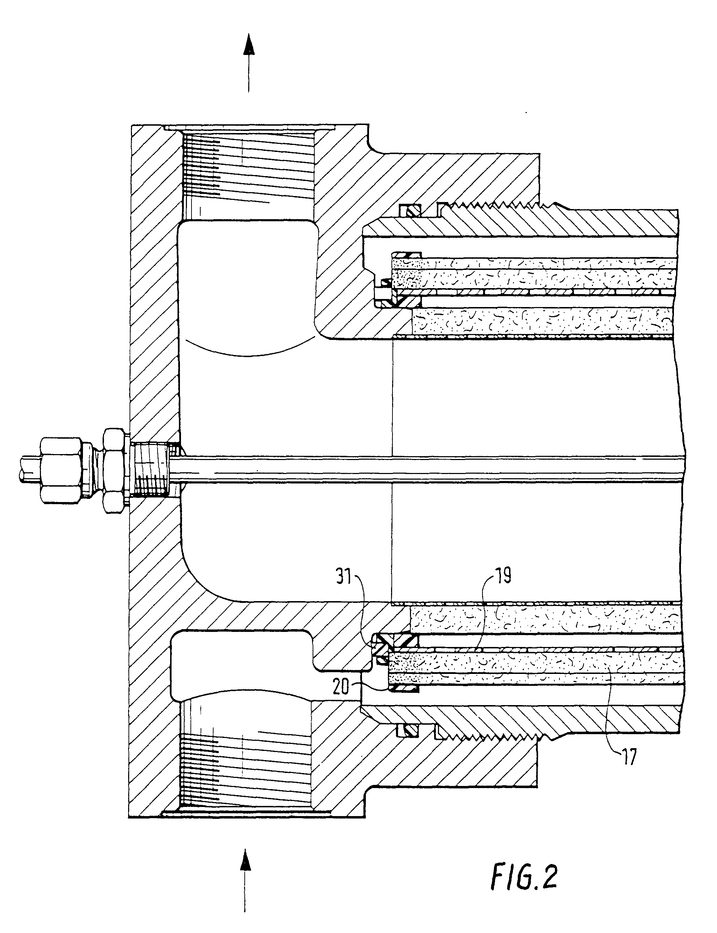

In Figur 2 ist gemäß der Erfindung eine Abdichtungsform gezeigt. Hier ist in der Dichtung 20 des Coalescerelements 17 ein Dichtungsring 31 eingelegt. Die Dichtung 20 ist in ihrer stirnseitigen Form derart gestaltet, daß eine zuverlässige Befestigung des Dichtungsrings 31 gewährleistet ist.

## Patentansprüche

1. Ölabscheider für Luft mit einem Gehäuse, einem Einlaß für ölbeladene Rohluft, einem Auslaß für entölte Reinluft, wenigstens einem Coalescerelement und einem Auslaß für das abgeschiedene Öl, wobei das Coalescerelement auf einem Stützkörper angeordnet ist,
- wobei der Stützkörper (19) und das Coalescerelement (17) an den stirnseitigen Enden in eine Vergußmasse (20, 21) eingebettet sind und diese Vergußmasse jeweils ein Abschlußelement bildet,
- wobei wenigstens ein Abschlußelement axial und/oder radial abdichtend an einer Dichtfläche des Gehäuses (10, 14) anliegt,
- wobei das Abschlußelement (20) ein Zweikomponentenelement ist,
- wobei eine erste Komponente die stirnseitige Abdichtung des Coalescerelement (17) und eine weitere Komponente die Dichtfläche gegenüber dem Gehäuse bildet und wobei an der dem Gehäuse (10, 14) zugewandten Dichtfläche ein separates Dichtelement (31) vorgesehen ist.

2. Ölabscheider nach Anspruch 1, **dadurch gekennzeichnet, daß** in Strömungsrichtung dem Coalescerelement (17) nachgeordnet ein weiteres Coalescerelement und/oder ein Filterelement (18) vorgesehen ist.

3. Ölabscheider nach einem der vorhergehenden Ansprüche, **dadurch gekennzeichnet, daß** das Coalescerelement (17) über eine Mittelverschraubung (23) in dem Gehäuse (10, 14) lösbar angeordnet ist.

4. Ölabscheider nach einem der vorhergehenden Ansprüche, **dadurch gekennzeichnet, daß** das Coalescerelement (17) und/oder das Abscheideelement (18) aus einem gewickelten, luftdurchlässigen Bandmaterial insbesondere einem Vlies besteht.

5. Ölabscheider, nach einem oder mehreren der vorhergehenden Ansprüche, **dadurch gekennzeichnet, daß** das rohrförmige Coalescerelement einen runden oder dreieckigen oder viereckigen Querschnitt aufweist.

6. Ölabscheider, nach einem oder mehreren der vorgenannten Ansprüche, **dadurch gekennzeichnet, daß** das rohrförmige Coalescerelement sternförmig gefaltet ist.

## Claims

1. Oil separator for air, having a housing, an inlet for oil-charged unfiltered air, an outlet for filtered air from which oil has been removed, at least one coalescing element and one outlet for the separated oil, the coalescing element being disposed on a supporting body,
- wherein the supporting body (19) and the coalescing element (17) are embedded at their end-face ends in a sealing compound (20, 21), and this sealing compound respectively forms closing means,
- wherein at least one closing means abuts against a sealing face of the housing (10, 14) in an axially and/or radially sealing manner,
- wherein the closing means (20) is a two-component means,
- wherein a first component forms the end-face seal of the coalescing element (17), and an additional component forms the sealing face relative to the housing, and wherein a separate sealing element (31) is provided on the sealing face facing the housing (10, 14).

2. Oil separator according to claim 1, **characterised in that**, when viewed with respect to the direction of flow, an additional coalescing element and/or a filter element (18) are/is provided downstream of the coalescing element (17).

3. Oil separator according to one of the preceding claims, **characterised in that** the coalescing element (17) is detachably disposed in the housing (10, 14) via a central screw connection (23).

4. Oil separator according to one of the preceding claims, **characterised in that** the coalescing element (17) and/or the separating element (18) are/is formed from a wound, air-permeable strip material, more especially a non-woven fabric.

5. Oil separator according to one or more of the preceding claims, **characterised in that** the tubular coalescing element has a circular or triangular or quadrilateral cross-section.

6. Oil separator according to one or more of the above-mentioned claims, **characterised in that** the tubular coalescing element is folded in a star-shaped manner.

## Revendications

1. Séparateur d'huile pour de l'air, comprenant un boîtier muni d'une entrée pour recevoir de l'air non filtré chargé d'huile, une sortie pour l'air nettoyé de l'huile, au moins un élément coalescent et une sortie pour l'huile séparée, l'élément coalescent étant prévu sur un organe de support,
**caractérisé en ce que**
- l'organe de support (19) et l'élément coalescent (17) sont intégrés dans une masse coulée (20, 21) à leur extrémité frontale et cette masse coulée forme chaque fois un élément de fermeture,
- au moins un élément de fermeture est appliqué axialement et/ou radialement de manière étanche contre une surface d'étanchéité du boîtier (10, 14),
- l'élément de fermeture (20) est un élément à deux composants, un premier composant formant l'étanchéité frontale de l'élément coalescent (17) et un autre composant la surface d'étanchéité par rapport au boîtier, avec un élément d'étanchéité (31) distinct sur la surface d'étanchéité tournée vers le boîtier (10, 14).

2. Séparateur d'huile selon la revendication 1,
**caractérisé en ce qu'**
en aval de l'élément coalescent (17), dans le sens de circulation, il est prévu un autre élément coalescent et/ou un élément de filtre (18).

3. Séparateur d'huile selon l'une quelconque des revendications précédentes,
**caractérisé en ce que**
l'élément coalescent (17) est monté de manière amovible dans le boîtier (10, 14) par l'intermédiaire d'une vis centrale (23).

4. Séparateur d'huile selon l'une quelconque des revendications précédentes,
**caractérisé en ce que**
l'élément coalescent (17) et/ou l'élément séparateur (18) sont formés d'une bande de matière, notamment d'une matière non tissée, perméable à l'air et enroulée.

5. Séparateur d'huile selon l'une quelconque des revendications précédentes,
**caractérisé en ce que**
l'élément coalescent, tubulaire, présente une section ronde ou triangulaire ou carrée.

6. Séparateur d'huile selon l'une quelconque des revendications précédentes,
**caractérisé en ce que**
l'élément coalescent, tubulaire, est plié suivant une forme d'étoile.
